# EUROPEAN PATENT SPECIFICATION

(11) **EP 2 692 616 B1**
(45) Date of publication and mention of the grant of the patent: **12.07.2017**
(21) Application number: 13179120.4
(22) Date of filing: 02.08.2013
(51) Int. Cl.: B62J 15/00, B62J 23/00, B62K 19/02

(54) **Bike frame, in particular for mountain bikes**
Fahrradrahmen, insbesondere für Mountainbikes
Cadre de vélo, en particulier pour vélos tout terrain

(30) Priority: 03.08.2012 IT MI20120297 U
(43) Date of publication of application: 05.02.2014
(73) Proprietor: F.I.V. Fabbrica Italiana Velocipedi Edoardo Bianchi S.p.A., 24047 Treviglio (BG) (IT)
(72) Inventor: Ippolito, Robert C., 24047 Treviglio (BG) (IT)
(74) Representative: Lotti, Giorgio

(56) References cited:
- DE-U1- 9 115 486
- DE-U1- 20 010 495
- DE-U1- 20 311 742
- DE-U1-202008 011 472
- GB-A- 2 480 438

## Description

The present invention relates to a bicycle frame, in particular for mountain bikes.

In general a mountain bike frame comprises:
- a seat tube equipped with an upper end for supporting a saddle and a lower end for supporting a pedal unit;
- a front tube unit comprising an upper front tube and a lower front tube connected to each other in a V manner with splayed ends connected to the seat tube, the connecting end of these front tubes is shaped like a support bushing on one side of a handlebar and on another side by a front wheel fork unit;
- a rear wheel fork unit comprising two V-shaped rear tube units facing each other with splayed ends connected to the seat tube and top end for supporting a rear wheel.

In particular, the lower front tube comprises a first portion facing the seat tube and a second portion opposite to the first facing the front wheel.

Starting from this structure, in order to reduce the overall weight, the above-described tubes are known to be made of carbon or carbon fibre.

This choice on the one hand makes the frame extremely lightweight, liftable with one hand with almost no effort, but at the same time fragile in the event of the impact of stones, rocks, gravel or the like against the tube elements themselves.

Disadvantageously, this often happens to the lower front tube, which, in part facing the wheels, is impacted against the stones, rocks, gravel or the like that are lifted by the front wheel during advancement of the bicycle.

Replacement of the frame, if not of the entire bicycle, is thus often requested on account of damage or breakage of the lower front tube due to the above-described phenomenon.

DE20010495, DE202008011472 and GB2480438 disclose bicycle frames provided with devices for protecting the lower front tube from the impact of any stones, rocks, gravel or the like that are lifted by the front wheel wherein such protecting devices are realized in form of separated elements with respect to the lower front tube.

The aim of the present invention is to produce a bicycle frame, in particular for mountain bikes, that is capable of overcoming the aforementioned drawbacks of the prior art in an extremely simple, economic and particularly functional manner.

Another aim is to produce a bicycle frame, in particular for mountain bikes, where the lower front tube is better protected from possible impact with stones, rocks, gravel or the like that are lifted by the front wheel during advancement of the bicycle. These aims, according to the present invention, are achieved by producing a bicycle frame, in particular for mountain bikes, as set out in claim 1.

Further characteristics of the invention are set out in the dependant claims.

The characteristics and the advantages of a bicycle frame, in particular for mountain bikes, according to the present invention, will become clearer from the following description, given by way of a non-limiting example, in relation to the accompanying schematic drawings, wherein:

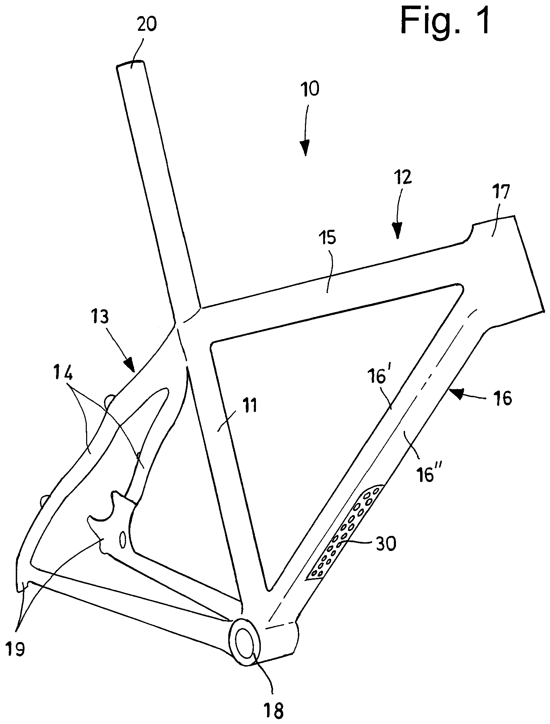

- figure 1 is a perspective view of a bicycle frame, in particular for mountain bikes, according to the present invention;

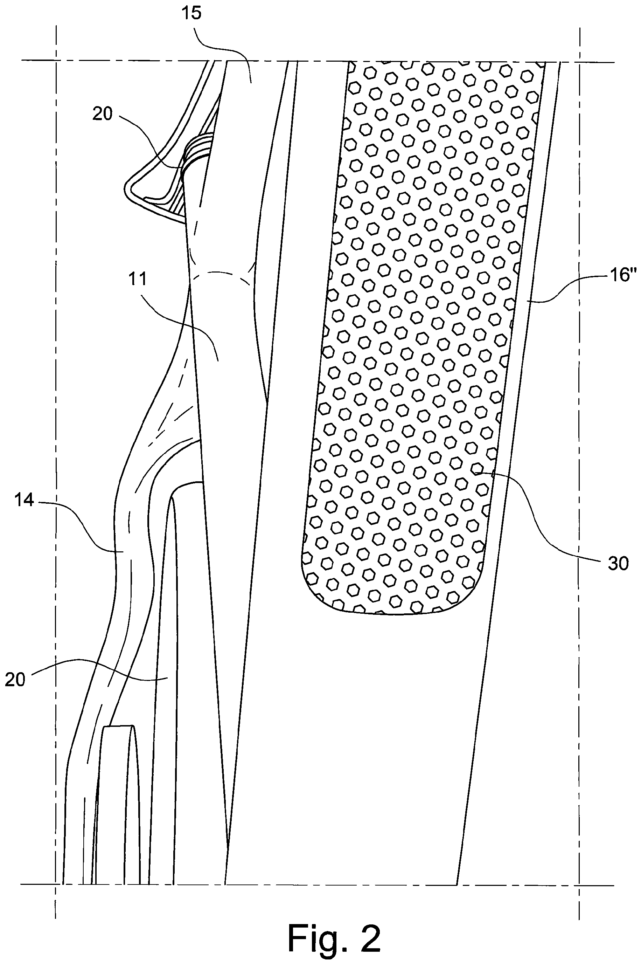

- figure 2 is an enlarged view of a detail of the frame of figure 1; and

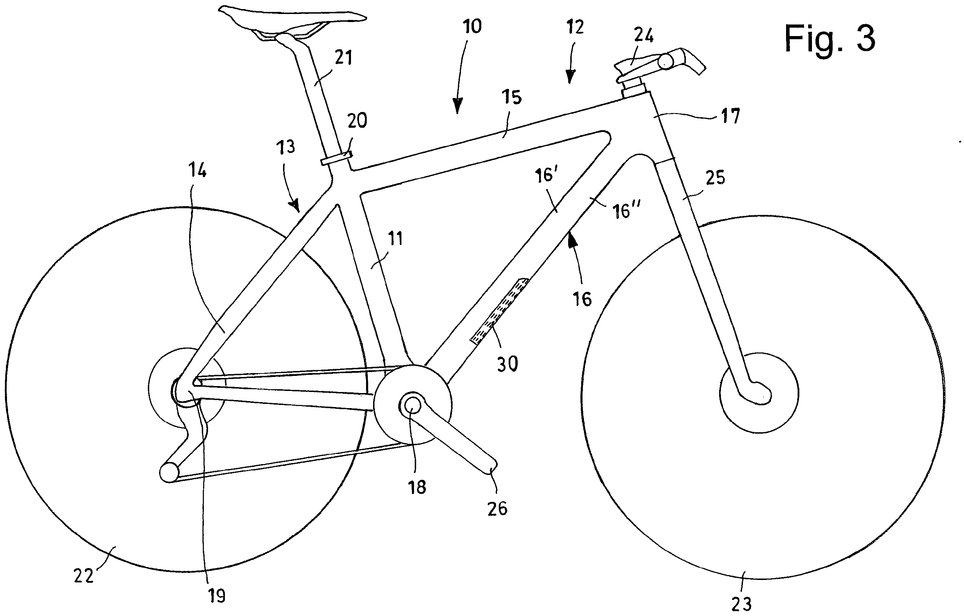

- figure 3 is a side view of a bicycle provided with a frame according to the present invention.

With reference to the drawings, an embodiment of a bicycle frame, in particular for mountain bikes, according to this invention, is shown by 10.

As in the mountain bikes of the prior art, this frame is of the type comprising an essentially vertical seat tube 11 that is equipped with an upper end 20 for supporting a saddle 21 and with a lower end 18 for supporting a pedal unit 26.

A front tube unit 12, comprising an upper front tube 15 and a lower front tube 16, is present on one side of this seat tube 11.

These front tubes 15 and 16 are connected to each other in a V manner with splayed ends connected to the seat tube 11 and with the connecting end 17 shaped like a support bushing on one side with a handlebar 17, and on another side of a front wheel holder 23 front wheel fork unit 25.

A rear fork tube unit 13, comprising two V-shaped rear tube units 14 facing each other with supporting ends for a rear wheel 22, are present on the opposite side of the seat tube 11.

As is known, the lower front tube 16 comprises a first portion 16' facing the seat tube 11 and a second portion 16" opposite to the first 16', facing the front wheel 23.

According to the invention, at least one portion of the second portion 16" of the lower front tube 16, i.e. the portion facing the front wheel 23, is provided with a front-facing mesh element 30 for protecting from the impact of any stones, rocks, gravel or the like that are lifted by the front wheel 23 during advancement of the bicycle.

Thus, the impacts with stones, rocks, gravel or the like being "absorbed" by the mesh 30 and not by the lower front tube 16, the integrity of the frame is preserved.

This advantage will become more apparent when the preferred materials used to construct the frame, materials that make the structure extremely lightweight, but, in fact, resistant to impact with stones, rocks, gravel or the like, are cited by way of example in the remaining part of this document.

It should indeed be taken into account that these bicycles, advancing at even at high speeds, are also able to impart a good speed to the stones lifted.

In the example shown in the drawings, the mesh element 30 is made in the form of a thin metal layer provided with a plurality of through slits.

In relation to the materials used, the lower front tube 16, as well as the other tubes that make up the frame 10, is preferably made of carbon, or carbon fibre, while the mesh 30 is preferably made of titanium and co-moulded directly onto the lower front tube 16.

It is also possible to provide an external coating of the lower front tube 16; in this case this outer coating shows a split at the mesh 30.

In the drawings, the mesh 30 is arranged in the middle of the lower front tube 16 next to the lower end 18 for supporting the pedals 26. As regards possible geometries of the lower front tube 16, both the first 16' portion and the second portion 16" bearing the mesh 30 can have a circular cross-section.

Alternatively, the first portion 16' can be V-shaped and the second portion 16" substantially flat.

The present invention naturally equally relates to both the frame and the bicycle comprising a frame 10 as previously described.

It is entirely easy to understand the operation of the bicycle frame, in particular for mountain bikes, according to the present invention.

During advancement of the bicycle, the front wheel often lifts stones, rocks or similar elements.

The latter, in part due to the advancement of the bicycle and in part due to a sort of motion imparted by the wheel itself, impact against the front portion of the lower front tube.

The latter, however, has a protective element made of titanium mesh at the potential portion of impact with stones, rocks or the like.

This mesh serves as a protective element for the carbon of the tube, preserving the integrity thereof over the long-term.

It has thus been seen that a bicycle frame, in particular for mountain bikes, according to the present invention achieves the aforementioned aims.

Indeed, the bicycle frame, in particular for mountain bikes, of the present invention provides an alternative to the frames known today that is extremely simple, economical and particularly functional, where the lower front tube is better protected from possible impact with stones, rocks, gravel or the like that are lifted by the front wheel during advancement of the bicycle. This aspect indeed considerably lengthens the life of the frame.

## Claims

1. Bicycle frame (10), in particular for mountain bikes, of the type comprising:
- a seat tube (11) equipped with an upper end (20) for supporting a saddle (21) and a lower end (18) for supporting a pedal unit (26);
- a front tube unit (12) comprising an upper front tube (15) and a lower front tube (16) connected to each other in a V manner with splayed ends connected to said seat tube (11), the connecting end (17) of said front tubes (15, 16) being shaped as a support bushing on one side of a handlebar (17) and on another side by a front wheel (23) fork unit (25),
- a rear fork tube unit (13) comprising two V-shaped rear tube units (14) facing each other with splayed ends connected to said seat tube (11) and top ends (19) for supporting a rear wheel (22);
wherein said lower front tube (16) comprises a first portion (16') facing said seat tube (11) and a second portion (16") opposite to the first (16') facing said front wheel holder (23);
said at least one portion of said second portion (16") of said lower front tube (16) facing said front wheel holder (23) is provided with a front-facing mesh element (30) for protecting from the impact of any stones, rocks, gravel or the like that are lifted by said front wheel (23) during advancement of said bicycle, **characterised in that** said mesh (30) is co-moulded onto said lower front tube (16).

2. Frame (10) according to claim 1, **characterised in that** said mesh element (30) is made in the form of a thin metal layer provided with a plurality of through slits.

3. Frame (10) according to any one of the preceding claims, **characterised in that** said lower front tube (16) is made of carbon or carbon fibre and said mesh (30) is made of titanium.

4. Frame (10) according to any one of the preceding claims, **characterised in that** it comprises an outer coating of said lower front tube (16), said outer coating having a split at said mesh (30).

5. Frame (10) according to any one of the preceding claims, **characterised in that** said mesh (30) is arranged in the half of said lower front tube (16) that is next to said lower end (18) of said seat tube (11) for supporting said pedal unit (26).

6. Frame (10) according to claim 1, **characterised in that** said first (16') and said second portion (16") of said lower front tube (16) have a circular cross section.

7. Frame (10) according to claim 1, **characterised in that** said first portion (16') of said lower front tube (16) is V-shaped and said second portion (16") of said lower front tube (16) is substantially flat.

8. Bicycle **characterised in that** it comprises a frame (10) according to any one of the preceding claims.

## Patentansprüche

1. Fahrradrahmen (10), insbesondere für Mountainbikes, des Typs umfassend:
- ein Sattelrohr (11), ausgestattet mit einem oberen Ende (20) zum Stützen eines Sattels (21) und einem unteren Ende (18) zum Stützen einer Pedaleinheit (26);
- eine vordere Rohreinheit (12), umfassend ein oberes Vorderrohr (15) und ein unteres Vorderrohr (16), die V-förmig miteinander mit aufgeweiteten Enden verbunden sind, die mit dem Sattelrohr (11) verbunden sind, wobei das Verbindungsende (17) der Vorderrohre (15, 16) als eine Stützbuchse auf einer Seite einer Lenkstange (17) und auf einer anderen Seite durch eine Vorderrad- (23) Gabeleinheit (25) geformt ist,
- eine hintere Gabelrohreinheit (13), umfassend zwei V-förmige, einander zugewandte, hintere Rohreinheiten (14) mit aufgeweiteten Enden, die mit dem Sattelrohr (11) verbunden sind, und obere Enden (19) zum Stützen eines Hinterrades (22);
wobei das untere Vorderrohr (16) einen ersten Abschnitt (16') umfasst, der dem Sattelrohr (11) zugewandt ist, und einen zweiten Abschnitt (16"), der dem ersten (16') gegenüberliegt und dem Vorderradträger (23) zugewandt ist;
der wenigstens eine Abschnitt des zweiten Abschnitts (16") des unteren Vorderrohrs (16), das dem Vorderradträger (23) zugewandt ist, ist mit einem vorderen Gitterelement (30) zum Schutz vor dem Aufprall von Steinen, Geröll, Splitt o.ä. versehen, die vom Vorderrad (23) während der Fahrt des Fahrrads hochgeschleudert werden, **dadurch gekennzeichnet, dass** das Gitter (30) im Verbund mit dem unteren Vorderrohr (16) gefertigt wird.

2. Rahmen (10) nach Anspruch 1, **dadurch gekennzeichnet, dass** das Gitterelement (30) in Form einer dünnen Metallschicht hergestellt ist, die mit einer Mehrzahl von durchgehenden Schlitzen versehen ist.

3. Rahmen (10) nach einem der vorstehenden Ansprüche, **dadurch gekennzeichnet, dass** das untere Vorderrohr (16) aus Kohlenstoff oder Kohlenstofffasern und das Gitter (30) aus Titan hergestellt ist.

4. Rahmen (10) nach einem der vorstehenden Ansprüche, **dadurch gekennzeichnet, dass** er eine Außenbeschichtung des unteren Vorderrohrs (16) umfasst, wobei die Außenbeschichtung an dem Gitter (30) geteilt ist.

5. Rahmen (10) nach einem der vorstehenden Ansprüche, **dadurch gekennzeichnet, dass** das Gitter (30) in der Hälfte des unteren Vorderrohrs (16) angeordnet ist, das sich neben dem unteren Ende (18) des Sattelrohrs (11) zum Stützen der Pedaleinheit (26) befindet.

6. Rahmen (10) nach Anspruch 1, **dadurch gekennzeichnet, dass** der erste (16') und der zweite Abschnitt (16") des unteren Vorderrohrs (16) einen kreisförmigen Querschnitt aufweisen.

7. Rahmen (10) nach Anspruch 1, **dadurch gekennzeichnet, dass** der erste Abschnitt (16') des unteren Vorderrohrs (16) V-förmig ist und der zweite Abschnitt (16") des unteren Vorderrohrs (16) im Wesentlichen flach ist.

8. Fahrrad, **dadurch gekennzeichnet, dass** es einen Rahmen (10) nach einem der vorstehenden Ansprüche umfasst.

## Revendications

1. Cadre de bicyclette (10), en particulier pour vélos tout terrain, du type comprenant :
- un tube de selle (11) équipé d'une extrémité supérieure (20) pour supporter une selle (21) et d'une extrémité inférieure (18) pour supporter un pédalier (26) ;
- un groupe de tubes avant (12) comprenant un tube avant supérieur (15) et un tube avant inférieur (16) connectés l'un à l'autre d'une manière en V avec des extrémités évasées connectées audit tube de selle (11), l'extrémité de connexion (17) desdits tubes avant (15, 16) étant profilée comme une douille de support d'un côté d'un guidon (17) et d'un autre côté par un groupe de fourche (25) de roue avant (23),
- un groupe de tubes de fourche arrière (13) comprenant deux groupes de tubes arrière en V (14) faisant face l'un à l'autre avec des extrémités évasées connectées audit tube de selle (11) et des extrémités supérieures (19) pour supporter une roue arrière (22) ;
dans lequel ledit tube avant inférieur (16) comprend une première portion (16') faisant face audit tube de selle (11) et une deuxième portion (16") opposée à la première (16') faisant face audit support de roue avant (23) ;
ladite au moins une portion de ladite deuxième portion (16") dudit tube avant inférieur (16) faisant face audit support de roue avant (23) est munie d'un élément à mailles orienté vers l'avant (30) pour protéger de l'impact de toutes pierres, roches, graviers ou similaires qui sont soulevées par ladite roue avant (23) durant le déplacement de ladite bicyclette, **caractérisé en ce que** ledit maillage (30) est co-moulé sur ledit tube avant inférieur (16).

2. Cadre (10) selon la revendication 1, **caractérisé en ce que** ledit élément à mailles (30) est réalisé sous la forme d'une mince couche de métal munie d'une pluralité de fentes passantes.

3. Cadre (10) selon l'une quelconque des revendications précédentes, **caractérisé en ce que** ledit tube avant inférieur (16) est réalisé en carbone ou en fibre de carbone et ledit maillage (30) est réalisé en titane.

4. Cadre (10) selon l'une quelconque des revendications précédentes, **caractérisé en ce qu'**il comprend un revêtement extérieur dudit tube avant inférieur (16), ledit revêtement extérieur ayant une division au niveau dudit maillage (30).

5. Cadre (10) selon l'une quelconque des revendications précédentes, **caractérisé en ce que** ledit maillage (30) est agencé dans la moitié dudit tube avant inférieur (16) qui est proche de ladite extrémité inférieure (18) dudit tube de selle (11) pour supporter ledit pédalier (26).

6. Cadre (10) selon la revendication 1, **caractérisé en ce que** ladite première (16') et ladite deuxième portion (16") dudit tube avant inférieur (16) ont une section transversale circulaire.

7. Cadre (10) selon la revendication 1, **caractérisé en ce que** ladite première portion (16') dudit tube avant inférieur (16) est en forme de V et ladite deuxième portion (16") dudit tube avant inférieur (16) est sensiblement plate.

8. Bicyclette **caractérisée en ce qu'**elle comprend un cadre (10) selon l'une quelconque des revendications précédentes.
